# EUROPEAN PATENT APPLICATION

(11) **EP 4 768 324 A1**
(43) Date of publication of application: **01.07.2026**
(21) Application number: 25225081.6
(22) Date of filing: 18.12.2025
(51) Int. Cl.: B60L 58/18, B60L 58/21, H01M 50/50, H02J 7/00, H02M 1/00, H02M 3/335

(54) **POWER SYSTEM WITH MULTIPLE OUTPUT VOLTAGE LEVELS**

(30) Priority: 19.12.2024 EP 24221801
(71) Applicant: Volvo Penta Corporation, 405 08 Göteborg (SE)
(72) Inventor: Kersten, Anton, 433 42 Partille (SE); Bhumireddy, Amaranath Reddy, 426 50 Göteborg (SE); Skoglund, Martin, 418 71 Göteborg (SE); Mirbagheri, Mina, 417 60 Göteborg (SE); Vekas, Kristian, 429 34 Kullavik (SE); Carlsson, Lars-Gunnar, 423 39 Torslanda (SE)
(74) Representative: Valea AB

(57) **Abstract**

A power system (300) for providing multiple output voltage levels (V1, V2, V3). The power system (300) comprises at least one battery pack (310) and a direct current to direct current (DC/DC) converter (320). The first voltage level (V1) is the DC/DC converter (320) output voltage level, the second voltage level (V2) is the battery pack (310) output voltage level, and the third voltage level (V3) is a sum of the battery pack (310) output voltage and DC/DC converter (320) output voltage.

## Description

### TECHNICAL FIELD

The disclosure relates generally to power system. In particular aspects, the disclosure relates to a power system with a direct current to direct current (DC/DC) converter for providing multiple voltage levels. The disclosure can be applied to any power system, vessels and vehicles using an electrical energy storage system, such as heavy-duty vehicles, e.g. trucks, buses, and construction equipment, among other vehicle types. Although the disclosure may be described with respect to a particular vehicle, the disclosure is not restricted to any particular vehicle.

### BACKGROUND

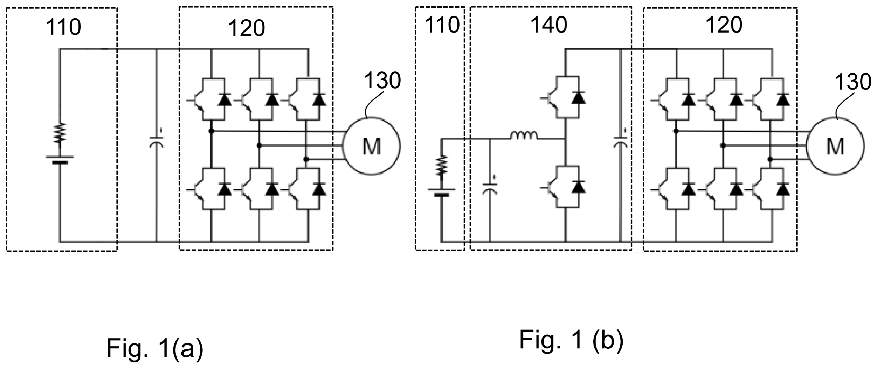

A Battery Electric Vehicle (BEV) powertrain is a system that propels an electric motor in a vehicle using energy stored in a battery. **Fig.1** **(a)** shows a conventional BEV powertrain comprising a battery pack **110,** an inverter **120** and an electric motor **130.** To increase the drive cycle efficiency of an electric vehicle, a boost DC/DC converter may be used to increase DC link voltage. **Fig.1** **(b)** shows a BEV powertrain with a boost DC/DC converter **140.** However, the boost DC/DC converter 140 must be designed for full active power needed by the inverter 120 and the electric motor 130 plus their combined losses. This makes the boost DC/DC converter 140 bulky and expensive when used for electric drives, Battery Energy Storage System (BESS) or similar applications. The battery pack 110 is connected in parallel with the boost DC/DC converter 140 which is connected to a traction voltage bus. Nowadays, a BEV powertrain system usually comprises multiple battery packs e.g. 6 or 8 battery packs. Connecting multiple battery packs to a traction voltage bus may cause inrush and equalization currents. Resisters are often suggested by customers for balancing and connection of multi-bus systems, which dissipate energy and thus with high losses or a slow equalization process. A common traction voltage bus also makes it difficult to control the current of individual battery pack and an Original Equipment Manufacturer (OEM) may violate battery limits such as State of Charge (SOC) range or power capability of a battery pack provided by other producers than the OEM itself. A more compact and efficient battery system and an improved technique for connecting multi-bus or multi-battery systems are needed for electric drives, BESS or similar applications.

### SUMMARY

According to a first aspect of the disclosure, a power system is provided. The power system comprises a first voltage source having a first terminal and a second terminal; a direct current to direct current (DC/DC) converter having a first input terminal, a second input terminal, a first output terminal and a second output terminal. The first and second output terminals of the DC/DC converter are connected to a first and second voltage output terminals respectively for providing a first voltage level between the first and second voltage output terminals. The first input terminal of the DC/DC converter is connected to the first terminal of the first voltage source. The second input terminal of the DC/DC converter is connected to the second terminal of the first voltage source and to a third voltage output terminal. The second output terminal of the DC/DC converter is connected to the first terminal of the first voltage source for providing a second voltage level between the second and third voltage output terminals for one or more auxiliary loads. The first voltage output terminal is configured to provide a third voltage level between the first and third voltage output terminals which is a sum of the first voltage source output voltage and the DC/DC converter output voltage. The DC/DC converter may be configured to provide a fraction of a full power needed by one or more loads connected between the first and third output terminals. The DC/DC converter may be configured to connect a second voltage source to the first voltage source for voltage equalization. Then a first switch is connected between the second voltage output terminal and a first terminal of the second voltage source, the first terminal of the second voltage source is connected to the first voltage output terminal, and the second terminal of the second voltage source is connected to the second terminal of the first voltage source directly or via a second switch. The DC/DC converter in this case is configured to provide only the power associated with the voltage difference between the first and second voltage sources.

The first aspect of the disclosure may seek to provide a power system with improved efficiency while using less bulky and expensive components compared to the existing solution. A technical benefit may include providing a compact, flexible and configurable power system with multiple output voltage levels and increased power density and efficiency thanks to the DC/DC converter which only needs to provide a fraction of the full power compared to a DC/DC converter configured to provide the full power needed by a load, making controlling of reactive power for a grid connected inverter easy, eliminating any inrush and equalization currents when connecting several batteries or voltages sources to the same voltage bus.

Optionally in some examples, including in at least one preferred example, the DC/DC converter may be a dual active bridge converter. A technical benefit may include providing a DC/DC converter which can act as a buck or boost converter with galvanic isolation.

Optionally in some examples, including in at least one preferred example, the DC/DC converter may be an inductor-inductor-capacitor resonant converter. A technical benefit may include providing different types of DC/DC converters for different applications and requirements.

Optionally in some examples, including in at least one preferred example, the DC/DC converter may be any one of a buck DC/DC converter, a boost DC/DC converter, or a DC/DC converter with any type of conversion ratio. A technical benefit may include providing different types of DC/DC converters for different applications and requirements.

Optionally in some examples, including in at least one preferred example, the DC/DC converter may be a unidirectional or bidirectional DC/DC converter. A technical benefit may include providing different types of DC/DC converters for different applications and requirements.

Optionally in some examples, including in at least one preferred example, the DC/DC converter may be configured to provide galvanic isolation between the input and output of the power system.

Optionally in some examples, including in at least one preferred example, the DC/DC converter output voltage may be configurable such that the third voltage level is between the battery pack output voltage and a maximum output voltage of the DC/DC converter. A technical benefit may include providing a flexible and configurable power system with various output voltage levels depending on various voltage level requirements of loads.

Optionally in some examples, including in at least one preferred example, the power system may be implemented in a renewable energy system, or a high-voltage direct current, HVDC, transmission system, or a battery energy storage system. A technical benefit may include providing a compact, efficient, flexible and configurable battery system for various power systems.

Optionally in some examples, including in at least one preferred example, the power system may be implemented in a motor drive system of a vehicle, a power system of a vessel. A technical benefit may include providing a power system which is more compact, cheap and efficient resulting in a more power efficient and less expensive vehicle compared to the existing solutions.

According to a second aspect of the disclosure, a vehicle comprises a power system of the first aspect is provided. The power system may be implemented in a motor drive system of the vehicle. The second aspect of the disclosure may seek to provide a vehicle which is more power efficient and less expensive compared to the existing solutions. A technical benefit may include providing a more power efficient and less expensive vehicle thanks to the power system which is more compact, cheap, efficient and flexible.

According to a third aspect of the disclosure, a method for providing multiple output voltage levels in a power system is provided. The method comprises providing a battery pack having a first terminal and a second terminal; providing a DC/DC converter having a first input terminal, a second input terminal, a first output terminal and a second output terminal; providing a connection between the first input terminal of the DC/DC converter and the first terminal of the battery pack; providing a connection between the second input terminal of the DC/DC converter and the second terminal of the battery pack; providing a connection between the first output terminal of the DC/DC converter and a first output terminal of the battery system; providing a connection between the second output terminal of the DC/DC converter, the first terminal of the battery pack and a second output terminal of the battery system; providing a connection between the second terminal of the battery pack and a third output terminal of the battery system; providing a first voltage level between the first and second output terminals of the battery system, which is the DC/DC converter output voltage level; providing a second voltage level between the second and third output terminals of the battery system, which is the battery pack output voltage; and providing a third voltage level between the first and third output terminals of the battery system, which is a sum of the battery pack output voltage and DC/DC converter output voltage.

The third aspect of the disclosure may seek to provide multiple output voltage levels in a battery system which is more compact, cheap, efficient and flexible. A technical benefit may include providing multiple output voltage levels in a battery system which is more compact, cheap, efficient and flexible compared to the existing solution, enabling easy controlling of reactive power for a grid connected inverter, eliminating any inrush and equalization currents when connecting several batteries to the same voltage bus.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGs. 1** **(a)** and **(b)** are exemplary powertrains according to some prior art examples.
**FIG. 2** **is** an equivalent circuit representation of a battery with a DC/DC converter according to some prior art examples.
**FIG. 3** is an equivalent circuit representation of a battery with a DC/DC converter according to an example.
**FIG. 4** is an exemplary battery system with a dual active bridge converter according to some examples.
**FIG. 5** is an exemplary battery system with an inductor-inductor-capacitor resonant converter according to some examples.
**FIG. 6** is a flow chart showing a method for providing multiple output voltage levels in a battery system according to an example.
**FIG. 7** is an exemplary vehicle comprising a battery system according to an example.
**FIG. 8** is an exemplary power system in a vessel.
**FIG. 9** is an exemplary power system according to an example.

### DETAILED DESCRIPTION

The detailed description set forth below provides information and examples of the disclosed technology with sufficient detail to enable those skilled in the art to practice the disclosure.

When operating a BESS in a grid tied mode, the available DC link must be higher than the peak of the line-to-line voltage of the grid to control also the reactive power flow and not just the active power flow. For the shown topology as in Fig. 1 (b), the boost converter 140 must be designed for the **full** active power as the main inverter 140 plus its losses. This makes the boost stage bulky and expensive.

When multiple batteries or battery cells, battery modules or battery packs are dynamically connected in parallel, there is an equalization current triggered. This current is dependent on the voltage difference and the internal impedance of the batteries. This current increases with the number of batteries, and it cannot be avoided due to measurement accuracies and practical purposes, such as availability of power. The equalization current superimposes the load current and, thus, reduces the utilizable current limit. Furthermore, the equalization current comes with ohmic losses, which reduces energy efficiency. Boost or buck converters may be used to control such inrush currents, but these must be designed for the **full** active power of a battery pack. This also makes the boost or buck stage bulky and expensive. For example, in a BEV powertrain, there may be 32 batteries, and all should be connected to the same traction voltage bus. Several busbars with intermediate stages may be used. A high voltage level, e.g. 1500V, may be desired to reduce cable conductor areas for long cables. Such high voltage level setups may also be desired for inverters because high voltage inverters have a reduced cost per kW. However, currents of the individual batteries at each traction voltage bus cannot be controlled. Batteries can only be disconnected in case of high battery temperature.

BESS components are usually manufactured by other producers and provided to OEMs which provide the main inverter which is connected to a grid. The control unit in the BESS component communicates the battery limits like SOC and power abilities to the OEM, but the OEM may violate these. The way to solve this problem is to disconnect the battery via contactors, which may destroy a service box already after several maneuvers.

To provide a high traction voltage without increasing the power ability of a battery pack or the existing number of the battery packs, it is proposed to rearrange the connection of a DC/DC converter and a battery pack.

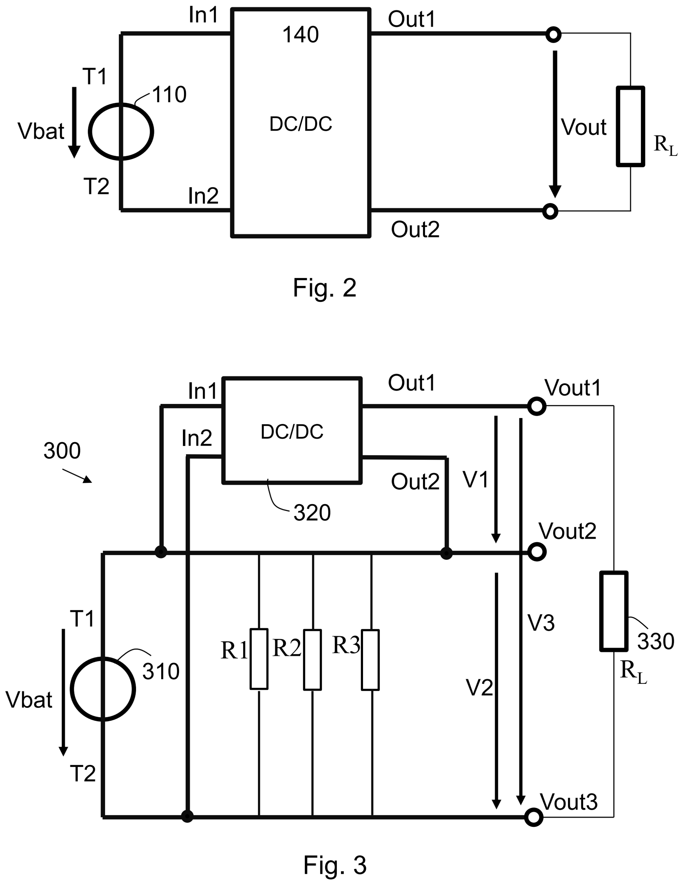

**Fig. 2** depicts an equivalent circuit representation of the DC/DC converter 140 and battery 110 as shown in Fig. 1(b) to simply show how the DC/DC converter 140 is connected to the battery 110 before rearranging the connection of the DC/DC converter and battery pack. As can be seen, the DC/DC converter 140 is connected in parallel to the battery 110. That is the input terminals **In1** and **In2** of the DC/DC converter 140 are connected to the first and second terminals **T1, T2** of the battery 110, respectively, and the output terminals **Out1** and **Out2** of the DC/DC converter 140 are connected to a load **R_{L}** which represents an inverter or any other loads. This connection of the DC/DC converter and battery pack can only provide one voltage level **Vout** which is the output voltage of the DC/DC converter 140 and the DC/DC converter 140 must be designed with a full power needed by the load R_{L}.

**Fig. 3** depicts an equivalent circuit representation of a battery system **300** comprising a battery pack **310** and a DC/DC converter **320,** where the connection of the DC/DC converter 320 to the battery pack 310 is rearranged. The battery system 300 has a first, a second and third voltage output terminals **Vout1**, **Vout2, Vout3** for providing multilevel output voltages **V1**, **V2, V3.** The battery pack 310 has a first terminal **T1** and a second terminal **T2.** The DC/DC converter 320 has a first input terminal **In1**, a second input terminal **In2,** a first output terminal **Out1** and a second output terminal **Out2.** The first input terminal In1 of the DC/DC converter 320 is connected to the first terminal T1 of the battery pack 310, the second input terminal In2 of the DC/DC converter 320 is connected to the second terminal T2 of the battery pack 310, the first output terminal Out1 of the DC/DC converter 320 is connected to the first voltage output terminal Vout1 of the battery system 300, the second output terminal Out2 of the DC/DC converter 320 is connected to the first terminal T1 of the battery pack 310 and to the second voltage output terminal Vout2 of the battery system 300, the second terminal T2 of the battery pack 310 is connected to the third voltage output terminal Vout3 of the battery system 300.

In other words, the connection of the DC/DC converter 320 to the battery pack 310 is rearranged such that the input terminals In1, In2 of the DC/DC converter 320 are connected in parallel with the first and second terminals T1, T2 of the battery pack 310 and the output terminals Out1, Out2 of the DC/DC converter 320 are connected in series with the first and second terminals T1, T2 of the battery pack 310. The battery system 300 thus can provide multiple output voltage levels V1, V2, V3. The first voltage level V1 is the DC/DC converter 320 output voltage level V_{DC/DC}, i.e. V1=V_{DC/DC}, the second voltage level V2 is the battery pack 310 output voltage level Vbat, i.e. V2=Vbat, and the third voltage level V3 is a sum of the battery pack 310 output voltage and DC/DC converter 320 output voltage, i.e. V3= V_{DC/DC}+Vbat.

When a load R_{L} **330** is connected between the first and third voltage output terminals Vout1, Vout3 of the battery system 300, the DC/DC converter 320 only needs to provide a fraction of the full power needed by the load R_{L} 330. That is the battery pack 310 and DC/DC converter 320 will join together and provide the full power needed by the load R_{L} 330.

For example, the load R_{L} 330 may be a datacenter or similar in a BEV powertrain, then the output voltage for the datacenter can be controlled and stabilized to e.g. 850V, whereas one more auxiliary loads R1, R2, R3 e.g. the thermal system, can have the second voltage level V2 which is the battery pack 310 output voltage level Vbat, which can vary with the SoC from e.g. 500V to 750V. In this way, the auxiliary loads do not load the DC/DC converter 320.

For different applications and requirements, different types of DC/DC converters may be used. The DC/DC converter 320 may be any one of a buck DC/DC converter, a boost DC/DC converter, or a DC/DC converter with any type of conversion ratio.

The DC/DC converter 320 may be a unidirectional or bidirectional DC/DC converter.

The DC/DC converter 320 may be configured to provide galvanic isolation between the input and output of the battery system 300.

The DC/DC converter 320 output voltage may be configurable such that the third voltage level V3 is between the battery pack 310 output voltage and a maximum output voltage of the DC/DC converter 320.

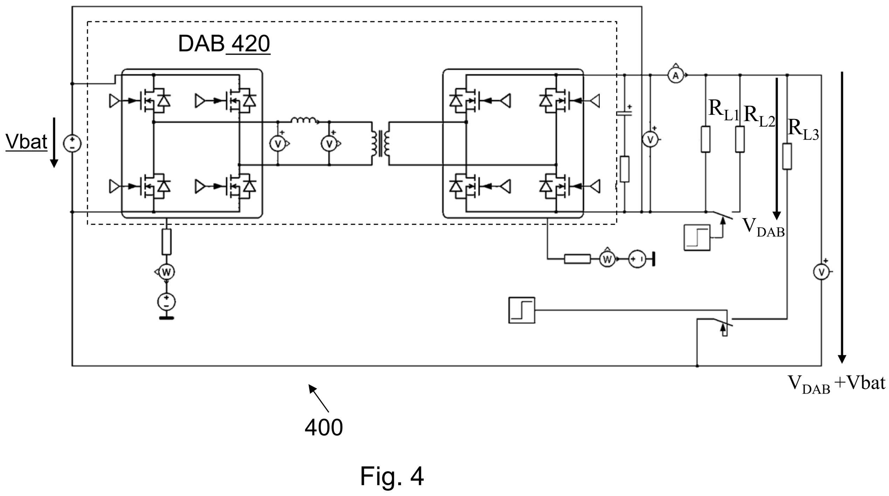

For example, the DC/DC converter 320 may be a Dual Active Bridge (DAB) converter. The DAB converter may act as a buck or boost converter with galvanic isolation. **Fig.4** shows a schematic block diagram of a battery system **400** with a DAB converter **420.** There may be different loads connected to the battery system 400 depending on voltage levels required by the loads. For example, a first load R_{L1} may be connected to the output of the DAB converter 420 to get power with a voltage level of V_{DAB}, a second load R_{L2} may be switched in and connected to the output of the DAB converter 420 to get power with a voltage level of V_{DAB}. To get power with a joint output voltage level corresponds to the sum of both the DAB converter 420 and battery pack, a third load R_{L3} may be switched in and connected between the output of the DAB converter 420 and the output of the battery pack to get power with a voltage level of V_{DAB} +Vbat. In this way, for example, one can turn a 750 Volt battery into e.g. a 1500V battery, whereas the DAB converter 420 only needs to provide half of the full power needed by the third load R_{L3}.

The DAB converter 420 may be configurable with any type of conversion ratio to have various output voltage levels. That is the joint voltage V_{DAB}+Vbat from the battery system 400 may be adjusted or configured to any voltage level between the battery voltage level, e.g. 750V, and the max voltage level of the DAB converter 420. However, the DAB converter 420 only needs to provide a portion of the full power needed by a load according to a ratio V_{DAB}/(V_{DAB}+Vbat).

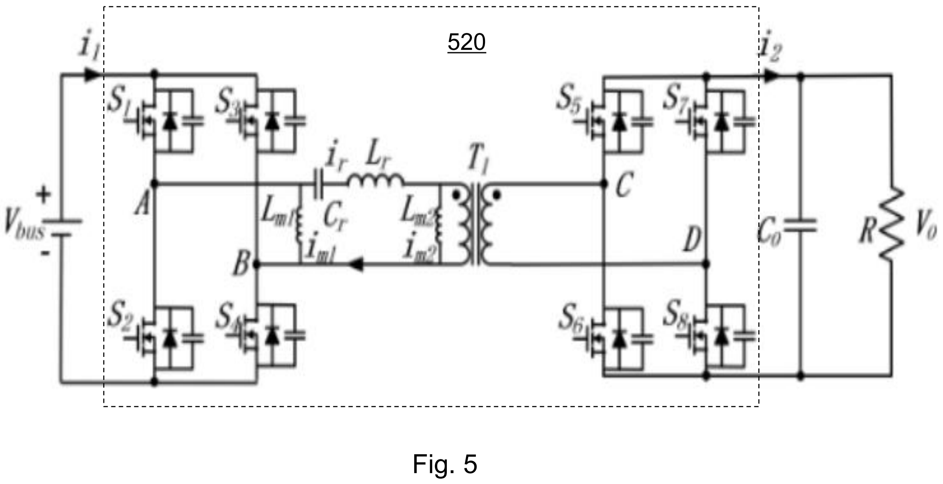

The DC/DC converter 320 may be an inductor-inductor-capacitor (LLC) resonant converter **520,** as shown in **Fig. 5****.** The LLC resonant converter 520 can galvanically isolate output from input. The LLC resonant converter 520 is implemented by transistors for bidirectional operation. The secondary side of the DC/DC 520, i.e. load side, may also contain only diodes for unidirectional operation. If the polarity of the secondary side is reversed, the LLC resonant converter 520 may act as a buck instead of a boost converter.

The DC/DC converter 320, 420, 520 output voltage may be boosted which increases efficiency and helps to control the reactive power for a grid connected inverter. The boost converter needs to be designed only for a fraction of the full power, corresponding to the ratio of the boosted voltage relative to the total output voltage, this makes the system more compact and efficient compared to the boost converter delivering full power.

The battery system 300, 400 may comprise multiple batteries or battery cells, battery modules or battery packs. When connecting several batteries or battery packs to the same voltage bus, the boost DC/DC converter can be used to precondition the voltage of the battery to be attached or the already attached batteries to eliminate any inrush and equalization currents. It is sufficient to connect only one DC/DC converter to multiple batteries or battery cells, battery modules or battery packs. However, multiple DC/DCs may be used for each battery pack.

The suggested boost DC/DC converter 320, 420, 520 can be used to control the full power of the battery pack and, thus, it may be used to protect the SOC range and power limits of the battery pack.

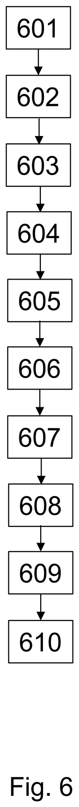

A method for providing multiple output voltage levels in a battery system will be described with reference to **Fig.6****.** The method comprises the following steps which may be performed in any suitable order or simultaneously.

**601:** providing a battery pack 310 having a first terminal T1 and a second terminal T2.

**602:** providing a DC/DC converter 320 having a first input terminal In1, a second input terminal In2, a first output terminal Out1 and a second output terminal Out2.

**603:** providing a connection between the first input terminal In1 of the DC/DC converter 320 and the first terminal T1 of the battery pack 310.

**604:** providing a connection between the second input terminal In2 of the DC/DC converter 320 and the second terminal T2 of the battery pack 310.

**605:** providing a connection between the first output terminal Out1 of the DC/DC converter 320 and a first output terminal Vout1 of the battery system 300.

**606:** providing a connection between the second output terminal Out2 of the DC/DC converter 320, the first terminal T1 of the battery pack 310 and a second output terminal Vout2 of the battery system 300.

**607:** providing a connection between the second terminal T2 of the battery pack 310 and a third output terminal Vout3 of the battery system 300.

**608:** providing a first voltage level V1 between the first and second output terminals Vout1, Vout2 of the battery system 300, which is the DC/DC converter 320 output voltage level.

**609:** providing a second voltage level V2 between the second and third output terminals Vout2, Vout3 of the battery system 300, which is the battery pack 310 output voltage level.

**610:** providing a third voltage level V3 between the first and third output terminals Vout1, Vout3 of the battery system 300, which is a sum of the battery pack 310 output voltage and DC/DC converter 320 output voltage.

The battery system 300, 400, 500 may be implemented in any power system, such as a renewable energy system, a motor drive system, a high-voltage direct current (HVDC) transmission system, or a battery energy storage system.

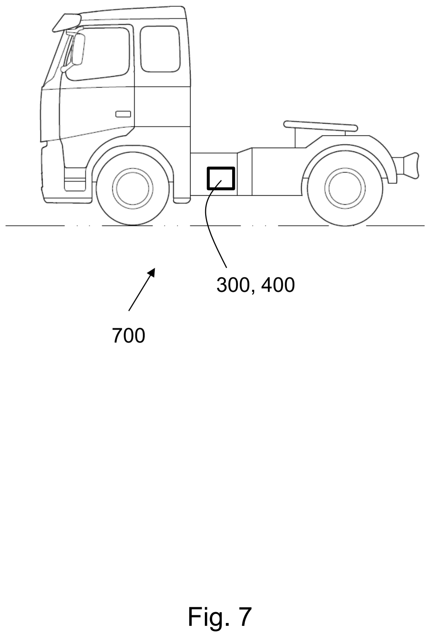

The battery system 300, 400, 500 may be implemented in a motor drive system of a vehicle. **Fig. 7** shows an exemplary vehicle **700** in which the battery system 300, 400, 500 may be implemented. The vehicle 700 comprises a battery system 300, 400, 500 as described above. The vehicle 700 may be a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle 700 may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle 700 may be operated by a user (not shown) and/or be at least partly automatically driven, i.e., it may be a vehicle comprising autonomous driving capabilities. The vehicle 700 may be a fully electric vehicle or a hybrid vehicle or a vehicle driven only by a combustion engine. As such, the vehicle 700 may comprise one or more electric motors/generators and/or an internal combustion engine for driving the vehicle 700.

The term vehicle will be used herein when referring to any of the above types of vehicles.

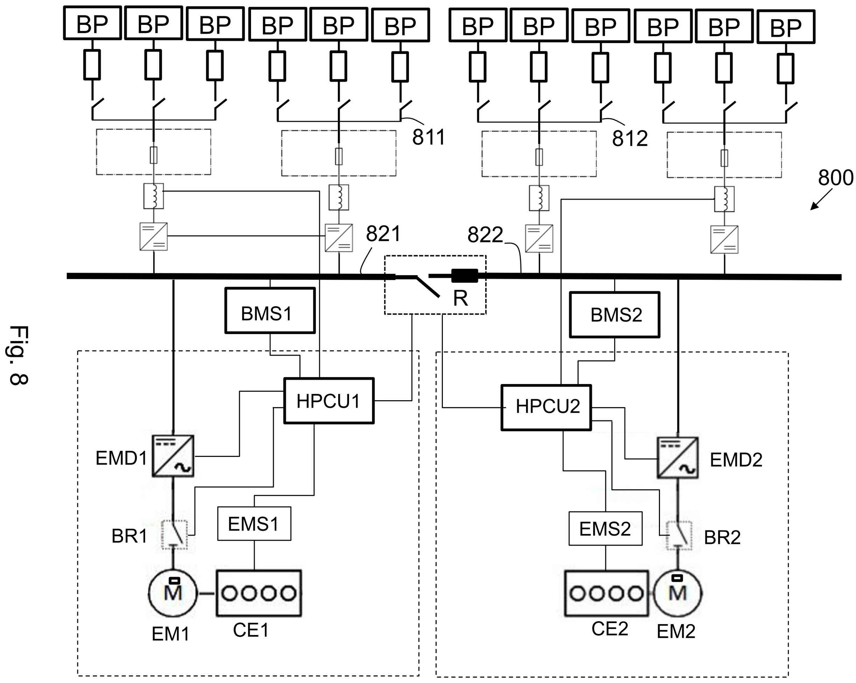

The rearranged connection of the DC/DC converter 320 to the battery pack 310 discussed above may be used to connect two voltage buses with different voltages in a power system for voltage equalization. **Fig. 8** is schematic block diagram showing an exemplary power system **800** in e.g. a vessel with two propulsion drivelines and two board power supplies. Multiple battery packs or modules **BP** should be connected to the same traction voltage bus. Several busbars e.g. **811, 812** with intermediate stages are used. Such setups are also desired because big inverters have a reduced cost per kW. A resistor **R** of 90 Ohm resistance is used to join main busbars **821, 822** which limits the current to a couple of ampere or even only milliampere. However, the voltage equalization process may take several days, otherwise the circulating currents among the battery systems become too high.

A DC/DC converter with a 1:1 ratio may be utilized to connect the main busbars 821, 822. This bidirectional converter can transfer energy from one side to the other and vice versa. However, the equalization rate is limited by the power of the DC/DC converter.

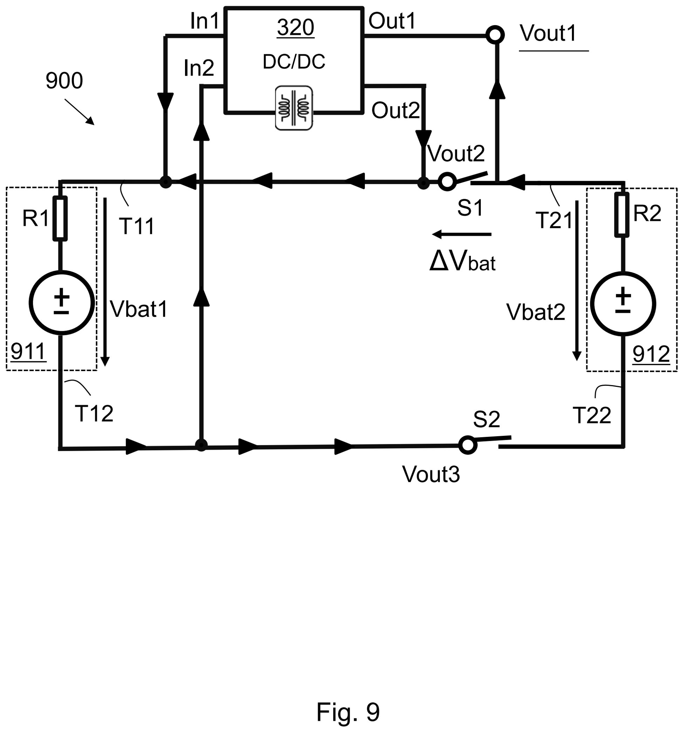

The DC/DC converter 320 with rearranged connection to achieve partial power conversion may be used to connect the main busbars 821 and 822 for voltage equalization. **Fig. 9** is a block diagram showing connections and principles for voltage equalization of two voltage systems. As shown in Figure 9, the DC/DC converter 320 is used to connect two voltage systems shown as voltage sources **911, 912** with resistors R1, R2. The voltage sources 911, 912 may represent the two main busbars 821 and 822 in the power system 800 of a vessel. The voltage sources 911, 912 may also represent a first and second voltage buses, a first and second battery packs, a first and second battery systems, or a first and second battery modules in any power system where two or more voltage buses or sources with different voltages need to be connected.

The input terminals In1, In2 of the DC/DC converter 320 are connected in parallel with the first and second terminals T11, T12 of a first voltage source 911, i.e. the first input terminal In1 of the DC/DC converter 320 is connected to the first terminal T11 of the first voltage source 911, the second input terminal In2 of the DC/DC converter 320 is connected to the second terminal T12 of the first voltage source 911. The first output terminal Out1 of the DC/DC converter 320 is connected the first voltage output terminal Vout1 and then to the first terminal T21 of a second voltage source 912, the second output terminal Out2 of the DC/DC converter 320 is connected to the first terminal T11 of the first voltage source 911 and to the second voltage output terminal Vout2. The first terminals T11, T21 of the first and second voltage sources 911, 912 are connected via a first switch or contactor S1. The second terminals T12, T22 of the first and second voltage sources 911, 912 are connected directly or via a second switch or contactor S2.

The two voltage sources 911, 912 have different voltages Vbat1, Vbat2. Before connecting the two voltage sources 911, 912 together, the first switch S1 is open, the first terminal of the second voltage source 912 is connected to the first voltage output terminal Vout1 which has a voltage level of V3=V_{DC/DC}+Vbat1. Then the DC/DC converter 320 needs to provide only the power associated with the voltage difference ΔVbat=Vbat1-Vbat2 for voltage equalization of the two voltage sources 911, 912. As soon as the two systems are equalized in voltage, the first switch S1 can be closed, the output voltage of the DC/DC converter 320 is zero and thus it is short circuited and the DC/DC converter 320 is disabled. Then the two voltage sources 911, 912 can be operated as one. In this way, the DC/DC converter 320 only needs to cover a small portion of the power that is exchanged between two systems. The DC/DC converter 320 may also be connected in the other direction.

Different converter types may be used for the DC/DC converter 320. For example, a DC/DC converter with galvanic isolation may be a suitable choice. A separation via diodes or similar is also possible.

The DC/DC converter 320 may be a two-quadrant DC/DC converter with a fixed output voltage polarity and bidirectional output currents, then two such DC/DC converters are needed for balancing the voltages in either direction. Alternatively, additional contactors may also be used to achieve polarity reversal such that only one two-quadrant DC/DC converter is needed.

The DC/DC converter 320 may be a four-quadrant DC-DC converter with both positive and negative output voltages and bidirectional output currents, then only one such DC/DC converter is needed for balancing the voltages in either direction.

To summarize, using the DC/DC converter 320 with partial power delivery in a power system has some advantages.

Battery systems of different voltages can be balanced by exchanging power via the parallel supplied DC/DC converter 320 that injects power in series to the connection switch i.e. the first switch S1, between two battery packs/systems or voltage buses/sources. The DC/DC converter 320 adjusts the voltage difference to control current between the two voltage systems.

The DC/DC converter 320 is sized only for the power that corresponds to the voltage difference resulting in a more compact system.

Exchange power can be several times higher than the power rating of the DC/DC converter 320.

Energy efficiency and power density are increased compared to other contemporary solutions.

The DC/DC converter 320 may be any type of DC/DC converter on the market. For example, a cheap DC/DC converter with a total power of 7.5 kW may be used to connect two voltage systems. At a voltage difference of 25V, the DC/DC converter 320 could deliver a power of 6.8kW. The total power that is controlled is then dependent on the battery system voltage, for example 700V. Thus, the battery system can then deliver 700V * 270A=189kW. Thus, in this way, the DC/DC 320 can control the power transferred between the two battery systems by controlling only the voltage difference ΔVbat. The DC/DC converter 320 just needs have enough voltage margin to control the voltage difference ΔVbat.

Different inverter types may be used for the DC/DC converter 320. Galvanically isolated converter types are preferred, but it is also possible to have the galvanically isolated via diodes or similar.

Power injection from the DC/DC converter 320 may be on positive or negative voltage bus.

**Some examples:**
Example 1: A battery system (300) having a first, a second and third output terminals (Vout1, Vout2, Vout3) for providing multiple output voltage levels (V1, V2, V3), wherein the battery system (300) comprises:
   at least one battery pack (310) having a first terminal (T1) and a second terminal (T2);
   a direct current to direct current, DC/DC, converter (320) having a first input terminal (In1), a second input terminal (In2), a first output terminal (Out1) and a second output terminal (Out2); and wherein
   the first input terminal (In1) of the DC/DC converter (320) is connected to the first terminal (T1) of the battery pack (310),
   the second input terminal (In2) of the DC/DC converter (320) is connected to the second terminal (T2) of the battery pack (310),
   the first output terminal (Out1) of the DC/DC converter (320) is connected to the first output terminal (Vout1) of the battery system (300),
   the second output terminal (Out2) of the DC/DC converter (320) is connected to the first terminal (T1) of the battery pack (310) and to the second output terminal (Vout2) of the battery system (300),
   the second terminal (T2) of the battery pack (310) is connected to the third output terminal (Vout3) of the battery system (300); and wherein
   the first voltage level (V1) is the DC/DC converter (320) output voltage level,
   the second voltage level (V2) is the battery pack (310) output voltage level, and
   the third voltage level (V3) is a sum of the battery pack (310) output voltage and DC/DC converter (320) output voltage.
Example 2: The battery system (300) according to Example 1, wherein the DC/DC converter (320) is configured to provide a fraction of a full power needed by a load (330) connected between the first and third output terminals (Vout1, Vout2) of the battery system (300).
Example 3: The battery system (300) according to any one of Examples 1-2, wherein the DC/DC converter (320) is a dual active bridge converter (400).
Example 4: The battery system (300) according to any one of Examples 1-2, wherein the DC/DC converter (320) is an inductor-inductor-capacitor resonant converter (500).
Example 5: The battery system (300) according to any one of Examples 1-4, wherein the DC/DC converter (320) is any one of a buck DC/DC converter, a boost DC/DC converter, or a DC/DC converter with any type of conversion ratio.
Example 6: The battery system (300) according to any one of Examples 1-5, wherein the DC/DC converter (320) is a unidirectional or bidirectional DC/DC converter.
Example 7: The battery system (300) according to any one of Examples 1-6, wherein the DC/DC converter (320) is configured to provide galvanic isolation between the input and output of the battery system (300).
Example 8: The battery system (300) according to any one of Examples 1-7, wherein the DC/DC converter (320) output voltage is configurable such that the third voltage level (V3) is between the battery pack (310) output voltage and a maximum output voltage of the DC/DC converter (320).
Example 9: The battery system (300) according to any one of Examples 1-8, wherein the battery system (300) is implemented in a renewable energy system, or a high-voltage direct current, HVDC, transmission system, or a battery energy storage system.
Example 10: The battery system (300) according to any one of Examples 1-8, wherein the battery system (300) is implemented in a motor drive system of a vehicle (700).
Example 11: A vehicle (700) comprises a battery system (300) according to any one of Examples 1-8.
Example 12: A method for providing multiple output voltage levels (V1, V2, V3) in a battery system (300) comprising:
   providing (601) a battery pack (310) having a first terminal (T1) and a second terminal (T2);
   providing (602) a direct current to direct current, DC/DC, converter (320) having a first input terminal (In1), a second input terminal (In2), a first output terminal (Out1) and a second output terminal (Out2);
   providing (603) a connection between the first input terminal (In1) of the DC/DC converter (320) and the first terminal (T1) of the battery pack (310),
   providing (604) a connection between the second input terminal (In2) of the DC/DC converter (320) and the second terminal (T2) of the battery pack (310),
   providing (605) a connection between the first output terminal (Out1) of the DC/DC converter (320) and a first output terminal (Vout1) of the battery system (300),
   providing (606) a connection between the second output terminal (Out2) of the DC/DC converter (320), the first terminal (T1) of the battery pack (310) and a second output terminal (Vout2) of the battery system (300),
   providing (607) a connection between the second terminal (T2) of the battery pack (310) and a third output terminal (Vout3) of the battery system (300); and
   providing (608) a first voltage level (V1) between the first and second output terminals (Vout1, Vout2) of the battery system (300), which is the DC/DC converter (320) output voltage level,
   providing (609) a second voltage level (V2) between the second and third output terminals (Vout2, Vout3) of the battery system (300), which is the battery pack (310) output voltage level,
   providing (610) a third voltage level (V3) between the first and third output terminals (Vout1, Vout3) of the battery system (300), which is a sum of the battery pack (310) output voltage and DC/DC converter (320) output voltage.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A power system (300, 400, 900) wherein the power system (300, 400, 900) comprises:
a first voltage source (310, 911) having a first terminal (T1, T11) and a second terminal (T2, T21);
a direct current to direct current, DC/DC, converter (320, 420, 520) having a first input terminal (In1), a second input terminal (In2), a first output terminal (Out1) and a second output terminal (Out2); and wherein
the first and second output terminals (Out1, Out2) of the DC/DC converter (320, 420, 520) are connected to a first and second voltage output terminals (Vout1, Vout2) respectively for providing a first voltage level (V1) between the first and second voltage output terminals (Vout1, Vout2);
the first input terminal (In1) of the DC/DC converter (320, 420, 520) is connected to the first terminal (T1, T11) of the first voltage source (310, 911);
the second input terminal (In2) of the DC/DC converter (320, 420, 520) is connected to the second terminal (T2) of the first voltage source (310,911) and to a third voltage output terminal (Vout3);
the second output terminal (Out2) of the DC/DC converter (320, 420, 520) is connected to the first terminal (T1, T11) of the first voltage source (310, 911) for providing a second voltage level (V2) between the second and third voltage output terminals (Vout2, Vout3) for one or more auxiliary loads (R1, R2, R3); and wherein
the first voltage output terminal (Vout1) is configured to provide a third voltage level (V3) between the first and third voltage output terminals (Vout1, Vout3) which is a sum of the first voltage source (310) output voltage and the DC/DC converter (320, 420, 520) output voltage; and wherein
the DC/DC converter (320, 420, 520) is configured to provide a fraction of a full power needed by one or more loads (330) connected between the first and third output terminals (Vout1, Vout3); or
the DC/DC converter (320, 420, 520) is configured to connect a second voltage source (912) to the first voltage source (911) for voltage equalization, and wherein a first switch (S1) is connected between the second voltage output terminal (Vout2) and a first terminal (T21) of the second voltage source (912), the first terminal (T21) of the second voltage source (912) is connected to the first voltage output terminal (Vout1), and the second terminal (T22) of the second voltage source (912) is connected to the second terminal (T12) of the first voltage source (911) directly or via a second switch (S2), and wherein
the DC/DC converter (320, 420, 520) is configured to provide only the power associated with the voltage difference between the first and second voltage sources (911, 912).

2. The power system (300, 400, 900) according claim 1, wherein the first and second voltage sources are any of battery packs, battery systems, battery modules, voltage buses.

3. The power system (300, 400, 900) according to any one of claims 1-2, wherein the DC/DC converter (320) is a dual active bridge converter (420).

4. The power system (300, 400) according to any one of claims 1-2, wherein the DC/DC converter (320, 420, 520) is an inductor-inductor-capacitor resonant converter (520).

5. The power system (300, 400, 900) according to any one of claims 1-4, wherein the DC/DC converter (320, 420, 520) is any one of a buck DC/DC converter, a boost DC/DC converter, or a DC/DC converter with any type of conversion ratio.

6. The power system (300, 400, 900) according to any one of claims 1-5, wherein the DC/DC converter (320, 420, 520) is a unidirectional or bidirectional DC/DC converter.

7. The power system (300, 400, 900) according to any one of claims 1-6, wherein the DC/DC converter (320, 420, 520) is configured to provide galvanic isolation between the first and second voltage sources (911, 912) .

8. The power system (300, 400, 900) according to any one of claims 1-7, wherein the DC/DC converter (320, 420, 520) output voltage is configurable such that the third voltage level (V3) is between the battery pack (310) output voltage and a maximum output voltage of the DC/DC converter (320, 420, 520).

9. The power system (300, 400, 900) according to any one of claims 1-8, wherein the power system (300, 400, 900) is implemented in a renewable energy system, or a high-voltage direct current, HVDC, transmission system, or a battery energy storage system, or in a motor drive system of a vehicle (700), or in a vessel with two propulsion drivelines and two board power supplies.

10. A vehicle (700) comprising a power system (300, 400, 900) according to any one of claims 1-8.

11. A method for providing multiple output voltage levels (V1, V2, V3) in a battery system (300, 400) comprising:
providing (601) at least one battery pack (310) having a first terminal (T1) and a second terminal (T2);
providing (602) a direct current to direct current, DC/DC, converter (320, 420, 520) having a first input terminal (In1), a second input terminal (In2), a first output terminal (Out1) and a second output terminal (Out2);
providing (603) a connection between the first input terminal (In1) of the DC/DC converter (320) and the first terminal (T1) of the battery pack (310),
providing (604) a connection between the second input terminal (In2) of the DC/DC converter (320) and the second terminal (T2) of the battery pack (310),
providing (605) a connection between the first output terminal (Out1) of the DC/DC converter (320) and a first output terminal (Vout1) of the battery system (300, 400),
providing (606) a connection between the second output terminal (Out2) of the DC/DC converter (320, 420, 520), the first terminal (T1) of the battery pack (310) and a second output terminal (Vout2) of the battery system (300),
providing (607) a connection between the second terminal (T2) of the battery pack (310) and a third output terminal (Vout3) of the battery system (300, 400); and providing (608) a first voltage level (V1) between the first and second output terminals (Vout1, Vout2) of the battery system (300, 400), which is the DC/DC converter (320, 420, 520) output voltage level,
providing (609) a second voltage level (V2) between the second and third output terminals (Vout2, Vout3) of the battery system (300, 400), which is the battery pack (310) output voltage level,
providing (610) a third voltage level (V3) between the first and third output terminals (Vout1, Vout3) of the battery system (300, 400), which is a sum of the battery pack (310) output voltage and DC/DC converter (320, 420, 520) output voltage.
